# EUROPEAN PATENT APPLICATION

(11) **EP 4 783 597 A1**
(43) Date of publication of application: **29.07.2026**
(21) Application number: 25154134.8
(22) Date of filing: 27.01.2025
(51) Int. Cl.: H04N 23/55, G02B 7/02

(54) **METHOD FOR ASSEMBLY OF AN ELECTRONIC CAMERA**

(71) Applicant: Aptiv Technologies AG, 8200 Schaffhausen (CH)
(72) Inventor: LIPKA, Janusz, 8200 Schaffhausen (CH); MELFRIED, Sebastian, 8200 Schaffhausen (CH)
(74) Representative: Bardehle Pagenberg Partnerschaft mbB Patentanwälte Rechtsanwälte

(57) **Abstract**

Method for assembly of an electronic camera 1, the method comprising the following steps:
a. providing a camera housing 10, comprising a housing body 12, a hollow lens guidance 14 and a transparent top 16, wherein the transparent top t6 closes the lens guidance 14 at one end thereof;
b. inserting a camera lens 20 into the lens guidance 14;
c. inserting a printed circuit board 30, with a camera chip 40 mounted thereon, into the housing body 12, wherein the camera chip 40 is spaced apart from the camera lens 20;
d. fixing the printed circuit board 30 within the housing body 12;
e. inserting at least one adhesive applicator pin 50 through at least one opening i8 within the lens guidance 14 such that the adhesive applicator pin 50 contacts the camera lens 20;
f. adjusting the distance D between the camera lens 20 and the camera chip 40 by moving the camera lens 20 by means of the adhesive applicator pin 50; and
g. fixing the camera lens 20 within the lens guidance 14 by means of an adhesive 52 applied by the adhesive applicator pin 50.

Further, an electronic camera 1 is claimed.

## Description

### 1. Field of the invention

The present invention relates to a Method for assembly of an electronic camera and an electronic camera. The method particularly relates to the adjustment of the sharpness of the electronic camera.

### 2. Technical Background

Electronic cameras are widely used in different technical fields. One application is in driver assistance systems of vehicles, like cars, vans or trucks. For such applications electronic cameras are used in form of camera modules that usually have a fixed focus. During manufacturing of such an electronic camera, it is preferred to adjust the focus of the camera to obtain a sharp image for a predetermined distance range.

The adjustment of the focus for an electronic camera can be cumbersome, particularly when other components of the electronic camera need to be assembled after the adjustment. Further, a perfect adjustment can be affected by later assembly steps. Particularly, if the PCB with the camera sensor has to be glued into a camera housing the shrinkage of the glue may affect the adjustment of the focus such that the camera image might become blurred.

Further, particularly in automotive applications it is desirable to have water and dust protected electronic cameras what usually make adjusting the focus impossible at late stages of the assembly.

Therefore, there is a need for a method for assembly of an electronic camera that overcomes the above-mentioned drawbacks and is easily and reliably to perform particularly in an automated manner. Further, there is a need for a perfectly adjusted and perfectly water and dust proof electronic camera.

### 3. Summary of the Invention

The above-mentioned object is achieved by a method for assembly of an electronic camera according to claim 1 and by an electronic camera according to claim 14.

One aspect of the invention relates to a method for assembly of an electronic camera, the method comprising the following steps:
a. providing a camera housing, comprising a housing body, a hollow lens guidance and a transparent top, wherein the transparent top closes the lens guidance at one end thereof;
b. inserting a camera lens into the lens guidance;
c. inserting a printed circuit board, with a camera chip mounted thereon, into the housing body, wherein the camera chip is spaced apart from the camera lens;
d. fixing the printed circuit board within the housing body;
e. inserting at least one adhesive applicator pin through at least one opening within the lens guidance such that the adhesive applicator pin contacts the camera lens;
f. adjusting the distance between the camera lens and the camera chip by moving the camera lens by means of the adhesive applicator pin; and
g. fixing the camera lens within the lens guidance by means of an adhesive applied by the adhesive applicator pin.

This method has several advantages over conventional assembly methods for electronic cameras. Particularly, the method enables a final adjustment of the focus for an electronic camera having a fully hermetically sealed lens and optical sensor. Since an adhesive applicator pin is used to both moving the camera lens and further application of an adhesive to fix the camera lens in the housing no undesired movement of the camera lens can occur prior to final fixing. Further, since the at least one adhesive applicator pin is inserted through at least one opening within the lens guidance the adjustment of the lens focus can be done after all the other components of the electronic camera are finally assembled and only the camera lens needs to be adjusted. Thus, there is no need to control adhesive shrinkage for proper lens alignment. The proposed method further provides a simpler and cheaper active alignment process due to fact that the active alignment is done only in optical axis direction. The method also facilitates an automated camera assembly process. Further, the active area on the PCB surface can be increased because there is no need for an adhesive on the PCB as in common assembly processes. Additionally, a camera assembled by this method can easily be provided dust and water ingress protected.

Preferably, the adhesive further closes the opening within the lens guidance, preferably in dust-tight and water-tight fashion. Thus, the electronic camera is dust-tight and water-tight. The same adhesive applied by the same adhesive applicator pin can be used for fixing the camera lens and for sealing the camera housing. This makes the assembly process even mor efficient.

Preferably, also the transparent top closes the lens guidance in a dust-tight and water-tight fashion.

Preferably, the camera lens comprises a circumferential lens barrel slot, wherein the adhesive applicator pin is inserted into the lens barrel slot. By the lens barrel slot the adhesive applicator pin can engage and move the camera lens in a secure form-fit manner. Further, the lens barrel slot allows engagement by the adhesive applicator pin at any rotational orientation of the camera lens. This further facilitates assembly and excludes any assembly faults.

Preferably, the lens barrel slot has a width (W) that substantially corresponds to an outer diameter (OD) of the adhesive applicator pin. Thus, there is no significant play between the adhesive applicator pin and the lens barrel slot, what improves the precision of the focus adjustment.

Preferably, the adhesive is applied through an application canal within the adhesive applicator pin. Thus, adjustment of the focus and application of the adhesive can be done by the same tool.

Preferably, the applicator pin is retracted during the application of the adhesive. This allows insertion of adhesive and sealing the at least one opening within the lens guidance directly after the fixing of the camera lens in one single adhesive application step.

Preferably, at least two adhesive applicator pins and two openings within the lens guidance are used, wherein each of the adhesive applicator pins is inserted through a corresponding one of the openings and contacts the camera lens. Thus, a symmetrical application of the engagement force by the adhesive applicator pins to the camera lens can be given, what decreases friction between the camera lens and the lens guidance. This allows a more precise movement of the camera lens for focus adjustment.

Preferably, the printed circuit board is fixed within the housing body by means of a further, second adhesive. The second adhesive is preferably applied to a back surface of the printed circuit board that is opposed to the surface carrying the camera chip. Thus, the printed circuit board can be glued in and sealed to the camera housing from the back side of the printed circuit board. This maximizes the useable surface area on the front side of the printed circuit board where the camera chip is located. Thus, the printed circuit board can be minimized for a given camera chip size. This also minimizes the overall size of the electronic camera. The second adhesive can be of the same material as the adhesive for the camera lens or can be of a different material.

Preferably, the opening within the lens guidance has the shape of an elongate hole that is elongate in lens adjustment direction (LAD).

Preferably, the adhesive applicator pin is moved in lens adjustment direction (LAD) during the step of adjusting the distance (D). Thus, the adhesive applicator pin is also moved within the elongate hole in lens adjustment direction, which is generally the in optical axis direction. If two adhesive applicator pins are used, two such elongate holes are provided within the lens guidance.

Alternatively, the opening within the lens guidance has a helix shape.

Preferably, the adhesive applicator pin is rotated around the lens guidance within the helix shaped openings during the step of adjusting the distance (D). If two adhesive applicator pins are used, two such helix-shapes holes are provided within the lens guidance.

Preferably, during the step of adjusting the distance (D) the sharpness of a picture of the camera chip is controlled and the step of fixing the camera lens is started when the picture is sharp. The control of the sharpness of the picture can be done automatically, thus the method facilitates automation of the assembly process.

Another aspect of the invention relates to an electronic camera, comprising a camera housing, comprising a housing body, a hollow lens guidance and a transparent top, wherein the transparent top closes the lens guidance at one end thereof; a camera lens, inserted into the lens guidance; a printed circuit board, with a camera chip mounted thereon, inserted into the housing body, wherein the camera chip is spaced apart from the camera lens; wherein the printed circuit board is fixed within the housing body; wherein the lens guidance comprises at least one through opening within the lens guidance for adjusting the distance between the camera lens and the camera chip; and an adhesive fixing the camera lens within the lens guidance.

Such a camera has the same advantages as the method described above. Particularly, the through opening in the lens guidance enables an adjustment of the lens focus after all the other components of the electronic camera are finally assembled.

Preferably, the adhesive further closes the through opening. This provides for a fully hermetically sealed electronic camera which is preferably dust-proof and water-proof.

### 4. Brief description of preferred embodiments

In the following, preferred embodiments of the disclosure are disclosed by reference to the accompanying figures.
- Fig. 1: shows a three-dimensional explosion view of components a first embodiment of an electronic camera together with an embodiment of adhesive applicator pins.
- Fig. 2: shows a three-dimensional view of a second embodiment of a fully assembled electronic camera.
- Fig. 3: shows a three-dimensional sectional view of a camera housing of the first embodiment.
- Fig. 4: shows a three-dimensional illustration of the assembly of a camera lens and a printed circuit board into the camera housing of the first embodiment.
- Fig. 5: shows a three-dimensional illustration of the application of a second adhesive for securing the printed circuit board of the first embodiment.
- Fig. 6: shows a three-dimensional illustration of the assembly of an electrical connector to a socket of the first embodiment.
- Fig. 7: shows a three-dimensional illustration of the assembly of the socket to the camera housing of the first embodiment.
- Fig. 8: shows a three-dimensional partial sectional view of the electronic camera of the first embodiment during adjusting the focus.
- Fig. 9A: shows an embodiment of the camera lens of the first and second embodiment.
- Fig. 9B: shows a three-dimensional detailed view of the electronic camera of the first embodiment when an adhesive applicator pin is inserted into a lens barrel slot for adjusting the focus.
- Fig. 10: shows a three-dimensional partial sectional view of the electronic camera of the first embodiment after retracting the adhesive applicator pins and closing openings of the lens guidance.
- Fig. 11A: shows a three-dimensional sectional view of a camera housing of the second embodiment.
- Fig. 11B: shows a three-dimensional partial sectional view of the electronic camera of the second embodiment during adjusting the focus.
- Fig. 12A: shows a top sectional view of the second embodiment during adjusting the focus where the adhesive applicator pins are in a first adjusting position.
- Fig. 12B: shows a top sectional view of the second embodiment during adjusting the focus where the adhesive applicator pins are in a second adjusting position.
- Fig. 13: shows a three-dimensional partial sectional view of the electronic camera of the second embodiment after retracting the adhesive applicator pins and closing openings of the lens guidance.

### 5. Detailed description of preferred embodiments

In the subsequent passages, the preferred embodiments of the invention are described with reference to the accompanying figures in more detail. It is noted that further embodiments are certainly possible, and the below explanations are provided by way of example only, without limitation. Throughout the present figures and specification, the same reference numerals refer to the same elements. The figures may not be to scale, and the relative size, proportions, and depiction of elements in the figures may be exaggerated for clarity, illustration, and convenience.

It is noted that when features, aspects, and/or embodiments are described herein by the term "substantially", manufacturing tolerances must be taken into consideration. In this manner, minor deviations during any kind of manufacturing, assembling or the like may pertain. Further, manufacturing tolerances, aging effects, or other minor defects or the like may pertain. These are all encompassed by the term "substantially". Although not always explicitly expressed by using the term "substantially", it is understood that the elements, parts, units, shapes, and / or the like described herein may nevertheless comprise such manufacturing tolerances.

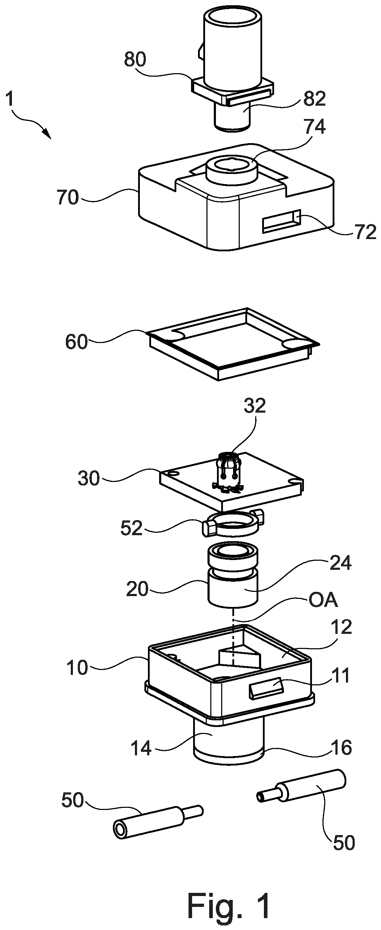

Fig. 1 shows a three-dimensional explosion view of components a first embodiment of an electronic camera 1. The electronic camera 1 comprises a camera housing 10, a camera lens 20, a printed circuit board 30, a camera chip 40, a socket 70 and an electrical connector 80.

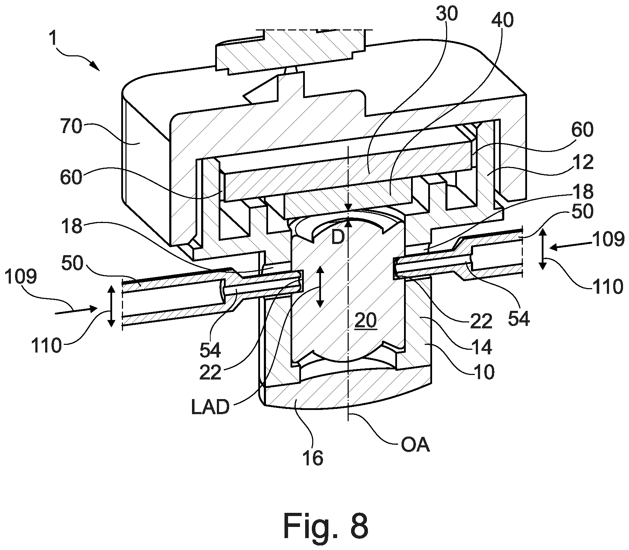

Additionally, Fig. 1 shows two adhesive applicator pins 50 that are used to move the camera lens 20 for adjusting the focus of the electronic camera 1 and for applying an adhesive 52 for fixing the camera lens 20 within the camera housing 10 after adjusting. Further the adhesive applicator pins 50 are used to apply adhesive 52 for closing the housing 10 after adjustment as described below in further detail. The applicator pins 50 are essentially tube shaped and comprise an application canal 54 (see Fig. 8) for feeding the adhesive 52 onto the camera lens 20 and into the openings 18. The applicator pins 50 are fluidly connected to an adhesive supply unit (not shown) that supplies the adhesive in fluid form. The adhesive can be hot melt adhesive that is supplied by the applicator pins 50 at an elevated temperature where the adhesive 52 is fluid and then the adhesive cools down in place to ambient temperature. The adhesive applicator pins 50 can also be connected to an automatic motion mechanism (not shown) that automatically moves the adhesive applicator pins 50 during adjustment of the focus in the desired direction. Further the automatic motion mechanism moves the adhesive applicator pins 50 automatically into and out of the openings 18.

The camera housing 10 is a monolithic structure that comprises a non-transparent housing body 12, a non-transparent hollow lens guidance 14 and a transparent top 16. The transparent top 16 closes the lens guidance 14 at one end thereof, preferably in a dust-proof and water-proof fashion. The transparent top 16 is transparent to the light being used by the electronic camera 1. It can be substantially clear if the camera is a RGB camera that uses visible light, or it can be infrared-transparent for being transparent to essentially only infrared light and blocks light wavelengths visible for the human eye. The transparent top 16 can be flat or can be lens shaped to act as an additional camera lens. Thus, the transparent top 16 allows light to enter into the electronic camera 1 and acts as a barrier for dust and water.

The camera housing 10 further comprises a hollow box-shaped housing body 12. The housing body holds and mounts the printed circuit board 30.

The camera lens 20 has a lens barrel 24 that is essentially cylindrically shaped. The camera lens 20 is transparent at least at both ends of the lens barrel 24 and contains one or more transparent lenses for guiding the light through the camera lens 20 and onto the camera chip 40. The camera lens 20 can be made of an acrylic plastic material or of glass.

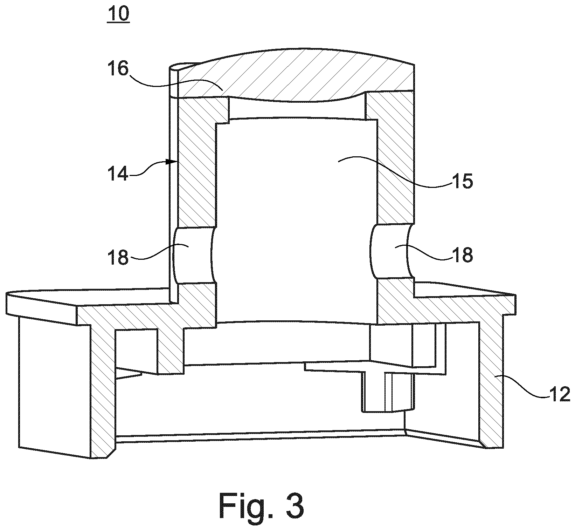

As shown in detail in Fig. 3 the lens guidance 14 has a hollow cylindrical interior 15 that supports and guides the camera lens 20. The inner diameter of the hollow cylindrical interior 15 is slightly larger than the outer diameter of the lens barrel 24. This allows insertion of the camera lens 20 into the lens guidance 14, such that the camera lens 24 is able to move in lens adjustment direction (LAD) which substantially corresponds with the direction of the optical axis (OA) of the camera lens 20. The diameters of the lens barrel 24 and the hollow cylindrical interior 15 are on the other hand chosen such that tilting of the camera lens 20 out of the optical axis (OA) is substantially prevented.

The lens guidance 14 further comprises preferably two openings 18 by which the camera lens 20 can be moved from the outside in LAD, for adjusting and the focus of the electronic camera 1. In the first embodiment, shown in Fig. 3, the openings 18 have the shape of an elongate hole that is elongate in lens adjustment direction (LAD). This shape allows the adhesive applicator pins 50 to contact the camera lens 20 from two opposing sides and then to move the camera lens 20 within the lens guidance 14 to adjust the distance D between the camera lens 20 and the camera chip 40 (see Fig. 8).

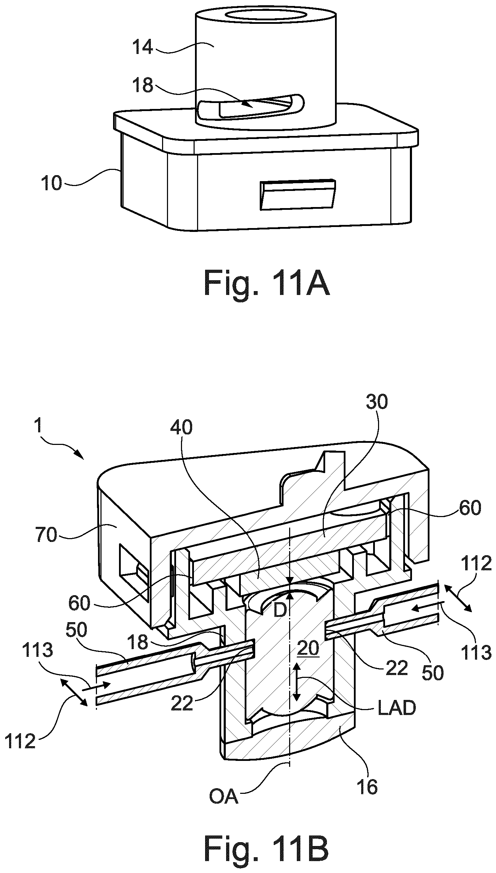

In the second embodiment, shown in Fig. 11A the openings 18 have a helix shape. Thus, the adhesive applicator pins 50 are rotated around the lens guidance 14 within the helix shaped openings 18 during the step of adjusting the distance D (see Figs 11B to 12B).

The printed circuit board 30 comprises the camera chip 40 (see Figs. 8, 10 and 13) and an electrical connector 32. The camera chip 40 can be a CCD chip or can use other technology for converting the incoming light into electronic signals in a usual manner. The electrical connector 32 is preferably a FAKRA socket connector according to DIN 72594-1 und USCAR-18. The printed circuit board 30 electrically supports the camera chip 40 and guides its electronic signals to the electrical connector 32 and other electronic components, like integrated circuits for driving or converting the image signals (not shown) on the printed circuit board 30.

The printed circuit board 30 is fixed within the housing body 12 preferably by an adhesive 60 that also serves as a seal between the printed circuit board 30 and the camera housing 10 for preventing dust or water ingress onto the camera lens 20 and the camera chip 40.

The socket 70 is a hollow box-shaped housing part that fits over the housing body 12. The socket 70 mechanically closes the camera housing 10 from back side and protects the printed circuit board 30. The socket 70 comprises a receptacle 72 that engages a snapping hook 11 at the housing body 12, when the socket 70 is slid over the housing body 12. The socket 70 further comprises a mounting flange 74 for an electrical connector 80. The electrical connector 80 serves as an interface of the electronic camera 1 to electronics that uses the image signals of the electronic camera 1. Thus, the electrical connector 80 can transmit the image signals but may also provide the electric energy used by camera chip 40 and the other electronic components on the printed circuit board 30. The electrical connector 80 is inserted into the mounting flange 74 and connects to the electrical connector 32 of the printed circuit board 30. The electrical connector 80 preferably comprises a seal 82 for a dust-proof and water-proof connection with the socket 70.

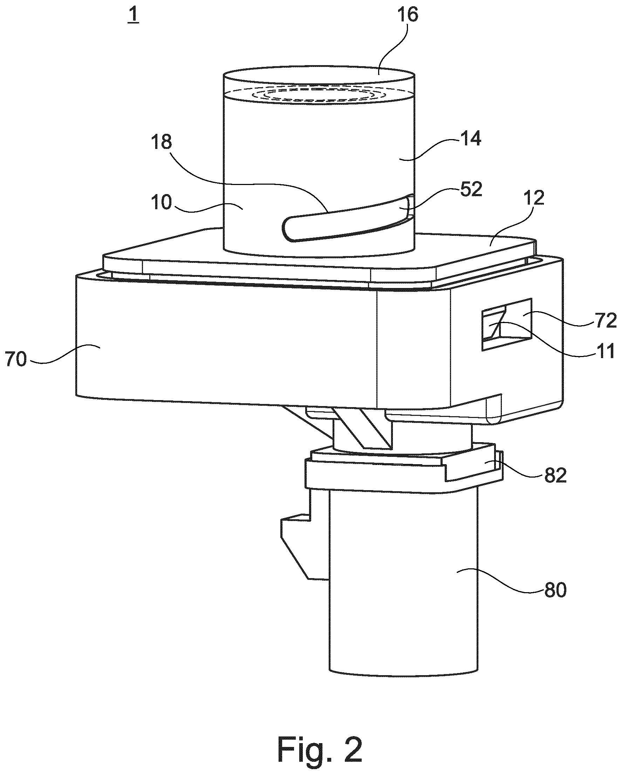

Fig. 2 shows a three-dimensional view of a second embodiment of a fully assembled electronic camera 1. The difference of the first embodiment and the second embodiment concerns only the shape of openings 18 within a lens guidance.

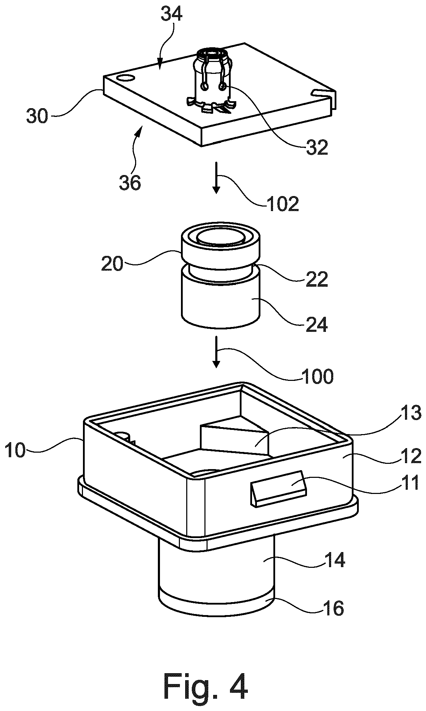

The Figs. 4 to 13 illustrate the assembly method of the electronic camera 1.

Fig. 4 shows by arrow 100 that the camera lens 20 is inserted into the hollow cylindrical interior 15 of the lens guidance 14 of the camera housing 20. Then, as shown in by arrow 102 the printed circuit board 30 is inserted into the housing body 12 of the camera housing 10. The printed circuit board 30 on a front surface 36 which contains the camera chip 40 is supported on distance blocks 13 at the edges of the interior of the housing body 12. Thereby, the printed circuit board 30 adopts a defined position perpendicular to the optical axis OA within the camera housing 10.

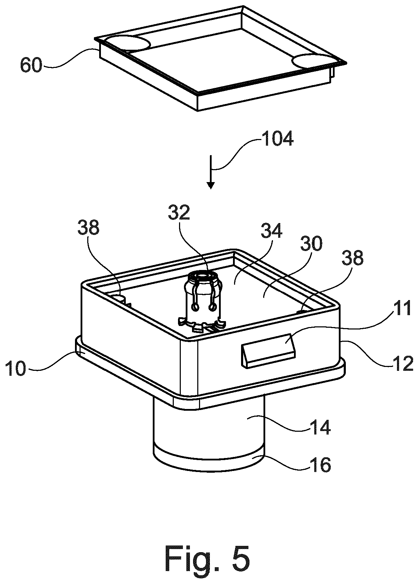

Fig. 5 shows by arrow 104 that a second adhesive 60 is applied to the perimeter of the back surface 34 of printed circuit board 30 for securing the printed circuit board 30 in the camera housing 10. The second adhesive 60 is preferably applied in form of a frame around the perimeter of the printed circuit board 30 such that it also acts as seal between the printed circuit board 30 and the camera housing 10 (see Fig. 8). The second adhesive 60 also fills any mounting holes 38 within the printed circuit board 30. After the application the second adhesive 60 it not finally cured to better allow the final assembly of the electrical connector 80. This eliminates tension on the printed circuit board 30 and stresses due to thermal deformation.

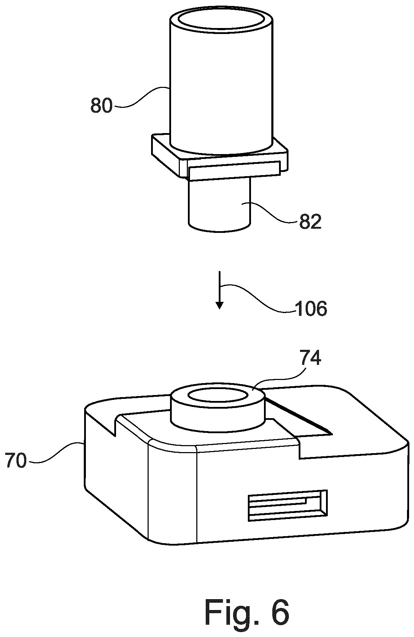

Fig. 6 shows by arrow 106 the assembly of the electrical connector 80 to the socket 70 of the electronic camera 1. The electrical connector 80 is preferably a FAKRA connector and is pressed into a through-opening in the mounting flange 74. Thereby the seal 82 seals the connection between the electrical connector 80 and the socket 70 in a dust-proof and water-proof manner.

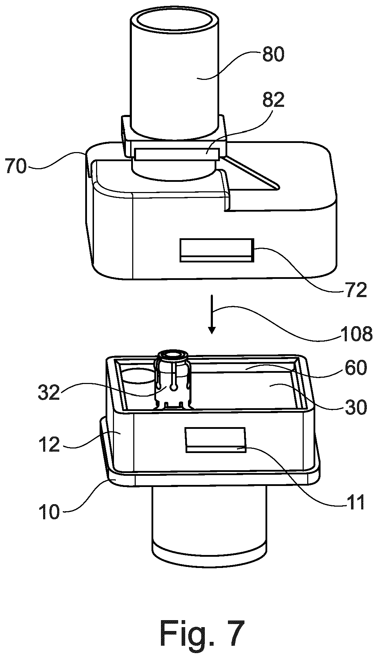

Fig. 7 shows by arrow 108 the assembly of the socket 70 including the electrical connector 80 to the camera housing 10 including the printed circuit board 30 and the camera lens 20. The socket 70 is slid over the housing body 12 until the snapping hook 11 on the housing body 12 engages with the receptacle 72 on the socket 70. For further dust and water protection an adhesive or heat sealing (not shown) can be used in-between socket 70 and camera housing 10.

Thereby, all components of the electronic camera 1 are in place and the electronic camera 1 is pre-manufactured. Now the focus of the electronic camera 1 is adjusted by adjusting the distance D between the camera chip 40 and the camera lens 20.

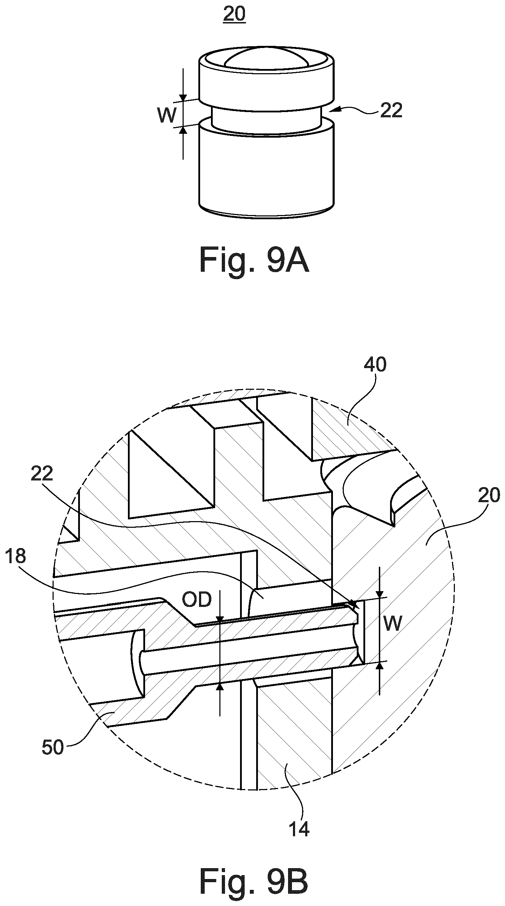

Fig. 8 shows the focus adjustment for the first embodiment of the electronic camera 1. First the adhesive applicator pins 50 are inserted into the openings 18 as shown by arrows 109. This is preferably done automatically by the automatic motion mechanism of the adhesive applicator pins 50 (not shown). Thereby, the adhesive applicator pins 50 are introduced into a lens barrel slot 22 at the outside of the lens barrel 24 of the camera lens 20. As shown in detail in Figs. 9A and 9B the barrel slot 22 is arranged circumferentially around the lens barrel 24 an has a width W that substantially corresponds to an outer diameter OD of the adhesive applicator pins 50. Thus, there is substantially no play between the adhesive applicator pins 50 and the camera lens 20 during focus adjustment. Due to the circumferential barrel slot 22 the rotational orientation of the camera lens 20 is irrelevant.

As shown in Fig. 8 by arrow 110 the adhesive applicator pins 50 are moved in lens adjustment direction LAD during the step of adjusting the distance D. Thereby, the electronic camera 1 is directed to a sample image and is attached to an appropriate imaging analysis electronics (not shown) that analyses the camera picture quality taken by the camera chip 40. The adhesive applicator pins 50 are slowly moved within the elongate openings 18 until the imaging analysis electronics determines a sufficiently sharp camera picture. Then the movement of the adhesive applicator pins 50 is automatically stopped.

In this adjusted position of the camera lens 20 within the lens guidance 14 an adhesive 52 is automatically applied through the adhesive applicator pins 50 onto the camera lens 20. Thereby, the adhesive 52 preferably fills the cavity between the lens barrel slot and the lens guidance 14. When the adhesive 52 is hardened or cured it holds the camera lens 20 in adjusted position within the lens guidance 14.

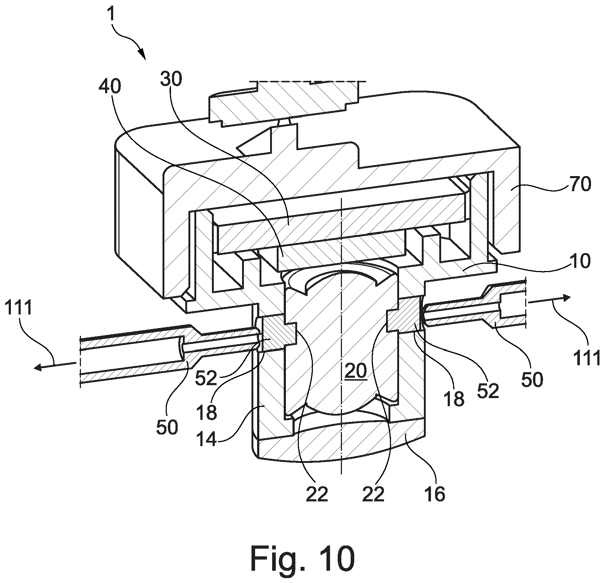

As shown in Fig. 10 by arrows 111, when the adhesive 52 is fully applied into the lens barrel slot 22 the adhesive applicator pins 50 can be automatically retracted by the automatic motion mechanism to further fill the openings 18 with adhesive 52. Thereby the camera housing 10 is sealed in a dust-proof and water-proof fashion and the assembly of the electronic camera 1 of the first embodiment is finished.

Fig. 11A to Fig. 13 show the focus adjustment for the second embodiment of the electronic camera 1. This embodiment is particularly suitable if a precise automatic motion mechanism that can move adhesive applicator pins 50 and the camera lens 20 by fractions of a millimeter in lens adjustment is not available. In such a situation a different version of the camera housing 10 with differently shaped openings 18 is used. Fig. 11A shows in detail the two helix-shaped openings 18 within the lens guidance 14 of the camera housing 10.

Fig. 11B shows by arrows 113 that, like in the first embodiment, the two adhesive applicator pins 50 are automatically inserted by the automatic motion mechanism (not shown) into the openings 18. Thereby, the adhesive applicator pins 50 are introduced into the lens barrel slot 22 at the outside of the lens barrel 24 of the camera lens 20.

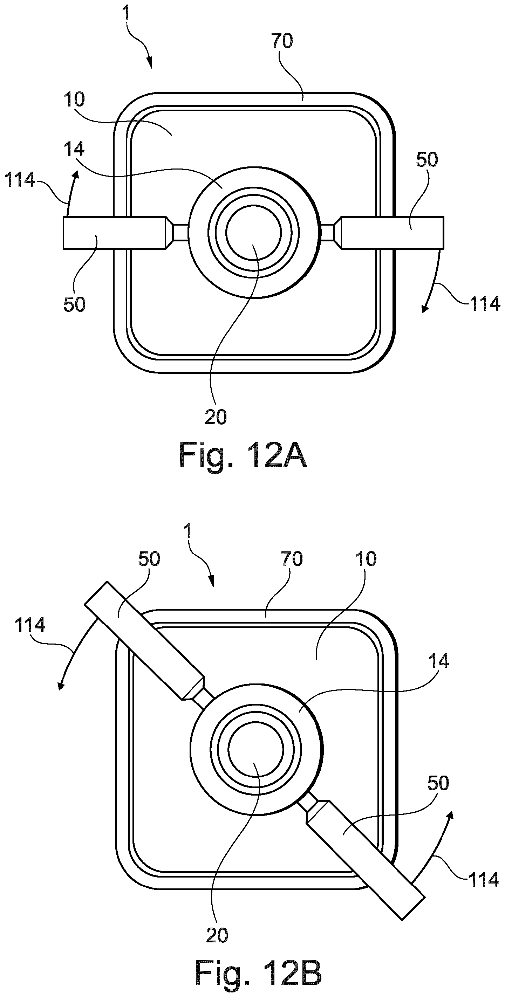

Afterwards, the adhesive applicator pins 50 are then rotated within the helix-shaped openings 18 around the lens guidance 14 as indicated by arrows 112 in Fig. 11B and arrows 114 in Figs. 12A and 12B which show the respective end positions of the rotation. The length of the openings 18 define the maximum rotation angle of the adhesive applicator pins 50 around the lens guidance 14, respectively, around the optical axis OA. The rotation of the adhesive applicator pins 50 around the optical axis OA cause a motion of the applicator pins 50 and the connected camera lens 20 in lens adjustment direction LAD respectively direction of the optical axis OA. As shown by comparing Figures 12A and 12B the rotation may preferably be substantially 45°. This allows using an automatic motion mechanism for the adhesive applicator pins 50 which must not be as precise as for the first embodiment. By the rotation the camera lens 20 is moved in lens adjustment direction LAD within the lens guidance 14 for adjusting the distance D between the camera lens 20 and the camera chip 40. By adjusting the distance D the focus of the electronic camera 1 is adjusted. The adjustment can be controlled electronically, similar to the in the first embodiment, by the imaging analysis electronics (not shown) that analyses the picture taken by the camera chip 40 and controls the automatic motion mechanism for rotating the adhesive applicator pins 50. The adhesive applicator pins 50 are slowly rotated within the helix-shaped openings 18 and -together with the camera lens 20 - axially moved in lens adjustment direction LAD until the imaging analysis electronics determines a sufficiently sharp camera picture. Then the rotation and axial movement of the adhesive applicator pins 50 is automatically stopped.

In this adjusted position of the camera lens 20 within the lens guidance 14 the adhesive 52 is automatically applied through the adhesive applicator pins 50 onto the camera lens 20. Thereby, the adhesive 52 preferably fills the cavity between the lens barrel slot and the lens guidance 14. When the adhesive 52 is hardened or cured it holds the camera lens 20 in adjusted position within the lens guidance 14.

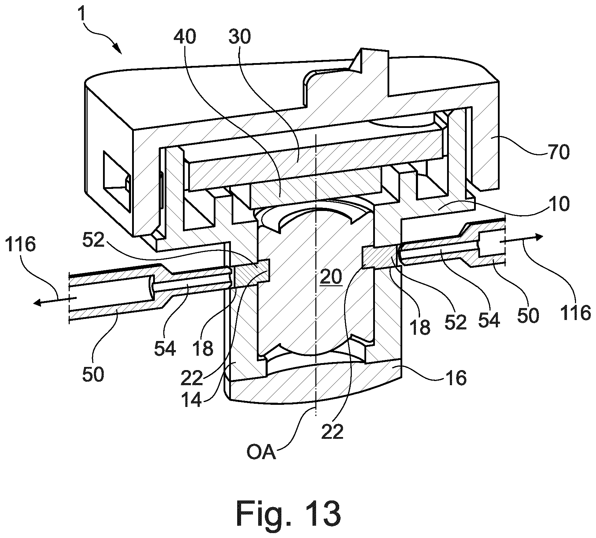

As shown in Fig. 13 by arrows 116, when the adhesive 52 is fully applied into the lens barrel slot 22 the adhesive applicator pins 50 can be automatically retracted by the automatic motion mechanism to further fill the also the helix-shaped openings 18 with adhesive 52. Thereby, the adhesive applicator pins 50 may be rotated again along the helix shaped openings 18 to fill them completely. By doing so, the camera housing 10 is sealed in a dust-proof and water-proof fashion and the assembly of the electronic camera 1 of the second embodiment is finished and the fully assembled and adjusted camera module shown in Fig. 2 is obtained.

### List of reference signs

- 1: electronic camera
- 10: camera housing
- 11: snapping hook
- 12: housing body
- 13: distance blocks
- 14: lens guidance
- 15: hollow cylindrical interior
- 16: transparent top
- 18: opening
- 20: camera lens
- 22: lens barrel slot
- 24: lens barrel
- 30: printed circuit board (PCB)
- 32: electrical connector
- 34: back surface of PCB
- 36: front surface of PCB
- 38: mounting holes
- 40: camera chip
- 50: adhesive applicator pin
- 52: adhesive
- 54: application canal
- 60: second adhesive
- 70: socket
- 72: receptacle
- 74: mounting flange
- 80: electrical connector
- 82: seal
- 100 - 106: arrows
- D: distance between the camera lens and the camera chip
- OD: outer diameter of adhesive applicator pin
- W: width of lens barrel slot
- LAD: lens adjustment direction
- OA: optical axis of electronic camera.

## Claims

1. Method for assembly of an electronic camera (1), the method comprising the following steps:
a. providing a camera housing (10), comprising a housing body (12), a hollow lens guidance (14) and a transparent top (16), wherein the transparent top (16) closes the lens guidance (14) at one end thereof;
b. inserting a camera lens (20) into the lens guidance (14);
c. inserting a printed circuit board (30), with a camera chip (40) mounted thereon, into the housing body (12), wherein the camera chip (40) is spaced apart from the camera lens (20);
d. fixing the printed circuit board (30) within the housing body (12);
e. inserting at least one adhesive applicator pin (50) through at least one opening (18) within the lens guidance (14) such that the adhesive applicator pin (50) contacts the camera lens (20);
f. adjusting the distance (D) between the camera lens (20) and the camera chip (40) by moving the camera lens (20) by means of the adhesive applicator pin (50); and
g. fixing the camera lens (20) within the lens guidance (14) by means of an adhesive (52) applied by the adhesive applicator pin (50).

2. Method according to claim 1, wherein the adhesive (52) further closes the opening (18) within the lens guidance (14), preferably in a dust-tight and water-tight fashion.

3. Method according to one of the claims 1 or 2, wherein the camera lens (20) comprises a circumferential lens barrel slot (22), wherein the adhesive applicator pin (50) is inserted into the lens barrel slot (22).

4. Method according to claim 3, wherein the lens barrel slot (22) has a width (W) that substantially corresponds to an outer diameter (OD) of the adhesive applicator pin (50).

5. Method according to one of the claims 1 to 4, wherein the adhesive (52) is applied through an application canal (54) within the adhesive applicator pin (50).

6. Method according to one of the claims 1 to 5, wherein the adhesive applicator pin (50) is retracted during the application of the adhesive (52).

7. Method according to one of the claims 1 to 6, wherein at least two adhesive applicator pins (50) and two openings (18) within the lens guidance (14) are used, wherein each of the adhesive applicator pins (50) is inserted through a corresponding one of the openings (18) and contacts the camera lens (20).

8. Method according to one of the claims 1 to 7, wherein the printed circuit board (30) is fixed within the housing body (12) by means of a second adhesive (60), preferably applied to a back surface (34) of the printed circuit board (30) that is opposed to the surface carrying the camera chip (40).

9. Method according to one of the claims 1 to 8, wherein the opening (18) within the lens guidance (14) has the shape of an elongate hole that is elongate in lens adjustment direction (LAD).

10. Method according to claim 9, wherein the adhesive applicator pin (50) is moved in lens adjustment direction (LAD) during the step of adjusting the distance (D).

11. Method according to one of the claims 1 to 8, wherein the opening (18) within the lens guidance (14) has a helix shape.

12. Method according to claim 11, wherein the adhesive applicator pin (50) is rotated around the lens guidance (14) within the helix shaped openings (18) during the step of adjusting the distance (D).

13. Method according to one of the claims 1 to 12 wherein during the step of adjusting the distance (D) the sharpness of a picture of the camera chip (50) is controlled and the step of fixing the camera lens (20) is started when the picture is sharp.

14. Electronic camera (1), comprising:
a. a camera housing (10), comprising a housing body (12), a hollow lens guidance (14) and a transparent top (16), wherein the transparent top (16) closes the lens guidance (14) at one end (15) thereof;
b. a camera lens (20), inserted into the lens guidance (14);
c. a printed circuit board (30), with a camera chip (40) mounted thereon, inserted into the housing body (12), wherein the camera chip (40) is spaced apart from the camera lens (20);
d. wherein the printed circuit board (30) is fixed within the housing body (12);
e. wherein the lens guidance (14) comprises at least one through opening (18) within the lens guidance (14) for adjusting the distance (D) between the camera lens (20) and the camera chip (40); and
f. an adhesive (52) fixing the camera lens (20) within the lens guidance (14).

15. Electronic camera according to claim 14, wherein the adhesive (52) further closes the through opening (18).
